# EUROPEAN PATENT SPECIFICATION

(11) **EP 1 494 006 B1**
(45) Date of publication and mention of the grant of the patent: **28.12.2011**
(21) Application number: 04076846.7
(22) Date of filing: 24.06.2004
(51) Int. Cl.: G01M 17/007, G01M 17/04, G01L 5/28

(54) **Roller assembly for a roller testing stand**
Rollenanordnung für ein Rollen-Prüfstand
Assemblage de rouleaux pour banc d'essai à rouleaux

(30) Priority: 30.06.2003 NL 1023777
(43) Date of publication of application: 05.01.2005
(73) Proprietor: Sun Test Systems B.V., 1382 LG Weesp (NL)
(72) Inventor: van Alfen, Maarten Rudolfus Henricus, 3818 AL Amersfoort (NL); Hellinghuizen, Marcel Johan, 3831 WL Leusden (NL); Moes, Pieter Jacob, 1102 SG Amsterdam (NL); Zuilhof, Wouter, 2024 VM Haarlem (NL)
(74) Representative: Timmers, Cornelis Herman Johannes

(56) References cited:
- DE-A- 3 841 248
- GB-A- 1 197 623
- US-A- 3 914 990
- US-A- 5 402 674

## Description

The invention relates to a roller assembly for roller testing stand, comprising at least two rotatingly driven first rollers with a small diameter to support the tyre of a wheel of a vehicle to be tested, the respective axes of said rollers being parallel.

Many embodiments of such roller assemblies are known. The one which is most widely used is an embodiment in which two rollers, which together support a wheel, have each a diameter of about 500 mm. Driving the rollers by the wheel of a vehicle on test makes it possible to determine the power delivered to the rollers; when, in the opposite case, the rollers drive a wheel of a vehicle which is being tested, the brake of the relative wheel can be tested.

A roller assembly according to the preamble of claim 1 is known from the German "Offenlegungschrift" DE 3841248 A1. This publication discloses a roller testing stand particularly designed for testing the correct operation of the ABS system of a four-wheel drive vehicle. To this end the horizontal distance between the driven rollers is adjustable, with as a consequence that the torque which can be transmitted between these rollers and the wheel resting on it decreases with this distance between the roller so that, at a given setting, the wheel starts slipping.

By adjusting the distance at different values for the four respective wheels one can simulate a slippery road surface and in this way test the way in which the ABS system resets thereto.

An auxiliary roller, way above the level of the main rollers, serves to block the vehicle to be tested in longitudinal direction.

The invention aims to provide a roller testing stand with such roller assemblies with the functionality of the roller testing stands equipped with rollers of a normal diameter, and as discussed above particularly with regard of the power which can be transmitted between rollers and wheel, and vice versa, providing a safe fixation of the tested vehicle on the stand without the need of additional blocking rollers or other blocking means.

To this end and according to the invention there is provided at both sides of this set of rollers at least one additional second roller, also with a small diameter, about equal to same of the first rollers and at an adjustable height, in such a way that each of these additional rollers can be brought, starting from a low position in which they lie next to the first rollers and are free from a wheel resting on these rollers, into a high position in which they rest against this wheel and additionally support it.

The document DE 38 41 248 discloses a roller assembly for a vehicle test stand, in which two rotatively driven first rollers support the tyre of a vehicle wheel during a brake test, the respective axes of said rollers being parallel. Adjacent of each of said first rollers is a similar sized second roller, being movable from a low position, in which they lie next to the first rollers and are free from a tyre resting on these rollers, to a high position, in which they rest against said tyre in order to restrain the vehicle from movement.

Without distracting from the functionality of a roller testing stand provided with a such a roller assembly, the advantage is obtained that the total structure of the roller testing stand can be very shallow, so that the installation thereof can be effected in a pit with a much smaller depth, needing less investments, while furthermore such a roller testing stand can be displaced much more easily. As a result of the fact that the supplementary rollers can be brought in one plane with the first rollers, it is much easier to drive a vehicle to be tested onto a roller testing stand provided with such a roller assembly; and such a roller testing stand can be advantageously installed at the end of a production line in a car factory, although the use thereof in work shops also is advantageous. A separate wheel lifting apparatus and restraining rollers in front or behind a vehicle to be tested are superfluous. The additional rollers counter act any tendency of a can to "climb out" of the testing stand. The lower weight of the total structure makes it possible to actuate the foundation of the structure consisting of the rollers with small diameter, vibratingly in a vertical direction to detect faults of the suspension or the structural environment thereof of the vehicle under test.

In a prefered embodiment two or more additional rollers are rotatingly coupled with the first rollers, resulting in an increase of the power which can be transferred between a roller testing stand and a vehicle under test, and vice versa.

Advantageous embodiments of the invention are described in the sub claims. The actuators can be mechanical, electrical or hydraulical actuators. Particularly, the measures according to the claims 3-5 result in a simple structure of the lifting mechanism which has the possibility to excitate the vehicle vibratingly to detect defects in the suspension and the bodywork.

It is observed that the German "Offenlegungsschrift" 3 701 254 discloses a brake testing stand with two rollers with a relatively small diameter onto which the wheel of which the brake is to be tested rests with therebetween an auxiliary roller adjustable in vertical direction which can be pressed against the tyre of the wheel which it to be tested. By these means the load on the main rollers can be released so that the ABS or the ASR system of the vehicle under test "thinks" that the related wheel is slipping, which gives the possibility to test the correct operation of such a system. Of course, the advantages obtained by means of the invention cannot be realised here.

The claimed exclusive rights also include a roller testing stand provided with a roller assembly according to the invention.

The invention is elucidated on the hand of the drawing.

Therein shows:
Fig. 1 schematically and in a side view a first embodiment of a roller assembly according to the invention;
Fig. 2 also schematically and in side view a second embodiment of such a roller assembly.

It is here again observed that the drawings are very schematically and that the details of the structures of the concrete embodiment of the support and the drive respectively of the rollers of the roller assembly according to the invention are not shown; however, the expert will, after noting the following description, not experience and problems in constructing a concrete embodiment of the subject of the invention. Although the drive of the rollers is, for the sake of clarity, shown as placed under the rollers, this drive can also be placed next to the rollers.

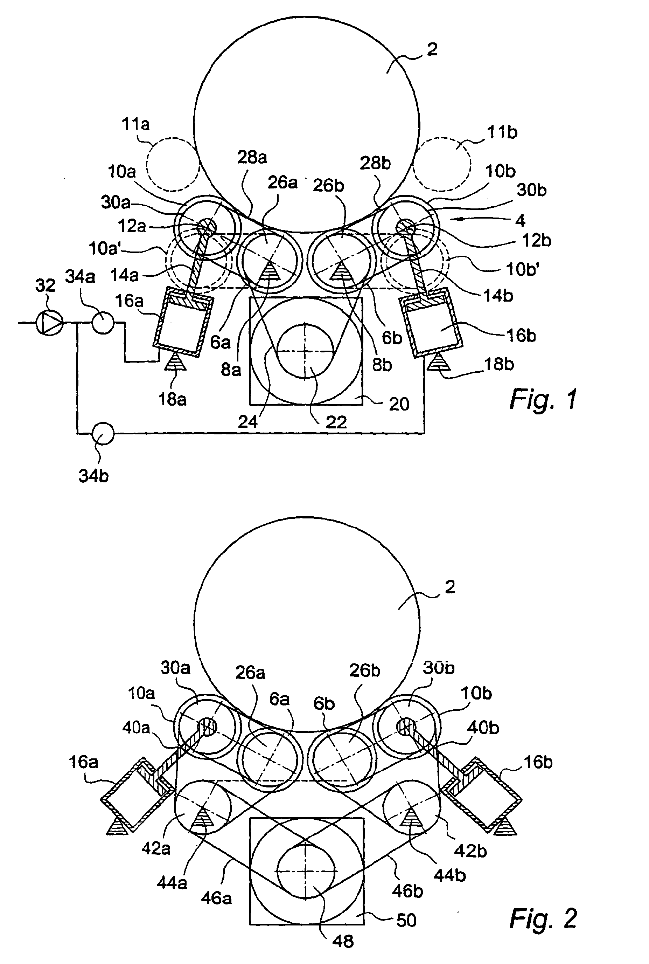

Fig. 1 shows the wheel 2 of a motor vehicle resting on the roller assembly which is constructed according to the proposal of the invention. This roller assembly 4 comprises two juxtaposed first rollers 6a, 6b, supported in their schematically shown bearings 8a, 8b and two respective rollers 10a, 10b, next thereto. While the bearing 8a, 8b of the rollers 6a, 6b has a fixed position, the bearings of the rollers 10a, 10b, indicated with reference numbers 12a and 12b respectively, are moveable; they are coupled to the driving rods 14a, 14b respectively of the hydraulic actuators 16a, 16b. These actuators are supported in pivot supports 18a, 18b.

A common driving motor 20 drives via a pulley 22 and belt 24, guided thereon the pulleys 26a, 26b, on the shafts of the rollers 6a, 6b; this driving movement is via the belts 28a, 28b transmitted to the pulleys 30a, 30b, which are fixed to the shafts of the rollers 10a, 10b.

From a source of hydraulic pressure fluid 32 pressure fluid is provided via the controllable valves 34a, 34b to the actuator 16a, 16b respectively. When the actuators are extended one has the situation which is shown in fig. 1; however, when the actuators 16a, 16b are retracted the rollers 10a, 10b have the position which is shown with the broken lines 10a', 10b'. In this situation the respective axe of the rollers lie essentially in one plane and the vehicle which has the wheel 12 can easily move on and off the roller assembly.

The control of the valves 34a, 34b - which is not shown - can be such that the actuators 16a, 16b in the extended position thereof, thus in the situation in which rollers 10a, 10b rest against a tyre 2, are not excited continuously but pulsatingly, so that a pulsating lifting movement is exerted on the wheel too. This makes it possible to bring a vehicle to be tested into vibration to check not only the wheel suspension but to check also whether or not the bodywork of the vehicle is sufficiently silent.

Although the drawings do not show it, the described structure can be accommodated in one common supporting frame, which, if so wanted, can be supported in such a way that a vibrating movement in vertical direction is possible, while also a - limited - rotating round a vertical axis can be brought about. This makes it possible to check quickly the fault axle of a vehicle under test.

It is clear that the use of rollers with small diameter in the way as shown in the figure results into a compact structure.

Fig. 2 shows a somewhat modified embodiment which differs from the one described herein before only in the way in which the rollers are being driven. Similar components are indicated with reference numbers corresponding to the ones which are already used herein before; the excitation of the actuators is not shown. In the embodiment according to fig. 2 the pulleys 26a and 30a are coupled by means of a belt 40a, 40b, which one halve of an auxiliary pulley 42a, 42b, of which the support is shown schematically and indicated with 44a, 44b respectively, of each of the pullies 42a, 42b the other halve is coupled by means of a belt 46a, 46b with the pulley 48 of the driving unit 50.

It will be clear that the invention is described herein before only very schematically and that a great number of practical realisations is possible. So is it possible to use more than two adjustable rollers, such a the rollers 11a, 11b, shown with broken lines in fig. 1 (of which the actuators are, for reasons of clarity not shown). The actuators can not only be hydraulic but also purely mechanical or electrical.

## Claims

1. Roller assembly (4) for a roller testing stand, comprising at least two rotatingly driven first rollers (26a,26b) with a small diameter to support the tyre (2)of a wheel of a vehicle to be tested, the respective axes of said rollers being parallel, in which at both sides of this set of rollers (26a,26b) is provided at least one additional second roller (10a,10b,30a,30b), also with a small diameter about equal to the same as the first rollers and at an adjustable height, in such a way that each of these additional rollers (10a,10b.30a,30b) can be brought, starting from a low position in which they lie next to the first rollers and are free from a tyre resting on these rollers, into a high position in which they rest against this tyre, **characterised in that** they additionally support said tyre.

2. Roller assembly according to claim 1, **characterised in that** two or more second rollers (10a,10b,30a,30b) are rotatingly coupled with the first rollers.

3. Roller assembly according to claims 1-2, **characterised in that** the support of each second roller (12a,12b) is coupled with an actuator (16a,16b) which sets the vertical position thereof.

4. Roller assembly according to claims 1-3, **characterised in that** the actuator (16a,16b) is a hydraulical actuator.

5. Roller assembly according to claim 4, **characterised in that** at least one of the actuators (16a,16b) is connected with a source of hydraulic pressure medium via a pulsatingly controlled valve (34a,34b).

6. Roller assembly according to claims 1-5, **characterised in that** the support of the respective rollers is accommodated in a common frame, which can be driven to and from in vertical direction.

7. Roller assembly according to claim 6, **characterised in that** the frame can be rotated around a vertical axis.

8. Roller testing stand comprising at least one roller assembly according to one or more of the preceding claims.

## Patentansprüche

1. Rollenanordnung (4) für einen Rollenprüfstand mit mindestens zwei rotatorisch angetriebenen ersten Rollen (26a, 26b) mit einem kleinen Durchmesser, um den Reifen (2) eines Rades eines zu testenden Fahrzeugs abzustützen, wobei die jeweiligen Achsen der Rollen parallel sind, wobei auf beiden Seiten dieses Satzes von Rollen (26a, 26b) mindestens eine zusätzliche zweite Rolle (10a, 10b, 30a, 30b) auch mit einem kleinen Durchmesser, der etwa gleich demselben wie jenem der ersten Rollen ist, und in einer einstellbaren Höhe derart vorgesehen ist, dass jede dieser zusätzlichen Rollen (10a, 10b, 30a, 30b) ausgehend von einer niedrigen Position, in der sie neben den ersten Rollen liegen und von einem auf diesen Rollen aufstehenden Reifen frei sind, in eine hohe Position, in der sie an diesem Reifen anliegen, gebracht werden können, **dadurch gekennzeichnet, dass** sie den Reifen zusätzlich abstützen.

2. Rollenanordnung nach Anspruch 1, **dadurch gekennzeichnet, dass** zwei oder mehr zweite Rollen (10a, 10b, 30a, 30b) rotatorisch mit den ersten Rollen gekoppelt sind.

3. Rollenanordnung nach den Ansprüchen 1-2, **dadurch gekennzeichnet, dass** die Abstützung jeder zweiten Rolle (12a, 12b) mit einem Stellglied (16a, 16b) gekoppelt ist, das die vertikale Position davon einstellt.

4. Rollenanordnung nach den Ansprüchen 1-3, **dadurch gekennzeichnet, dass** das Stellglied (16a, 16b) ein hydraulisches Stellglied ist.

5. Rollenanordnung nach Anspruch 4, **dadurch gekennzeichnet, dass** mindestens eines der Stellglieder (16a, 16b) mit einer Quelle für ein Hydraulikdruckmedium über ein pulsierend gesteuertes Ventil (34a, 34b) verbunden ist.

6. Rollenanordnung nach den Ansprüchen 1-5, **dadurch gekennzeichnet, dass** die Abstützung der jeweiligen Rollen in einem gemeinsamen Rahmen aufgenommen ist, der in einer vertikalen Richtung hin und her angetrieben werden kann.

7. Rollenanordnung nach Anspruch 6, **dadurch gekennzeichnet, dass** der Rahmen um eine vertikale Achse gedreht werden kann.

8. Rollenprüfstand mit mindestens einer Rollenanordnung nach einem oder mehreren der vorangehenden Ansprüche.

## Revendications

1. Ensemble de rouleaux (4) pour un banc d'essai à rouleaux, comprenant au moins deux premiers rouleaux entraînés en rotation (26a, 26b) avec un petit diamètre pour supporter le pneu (2) d'une roue d'un véhicule à mettre à l'essai, les axes respectifs desdits rouleaux étant parallèles, dans lequel est disposé, au niveau des deux côtés de ce jeu de rouleaux (26a, 26b) au moins un second rouleau additionnel (10a, 10b, 30a, 30b) également avec un petit diamètre environ égal à celui des premiers rouleaux et à une hauteur réglable, de façon à ce que chacun de ces rouleaux additionnels (10a, 10b, 30a, 30b) puisse être amené, depuis une position basse dans laquelle ils se trouvent à côté des premiers rouleaux et sont sans contact avec un pneu reposant sur ces rouleaux, à une position haute dans laquelle ils reposent contre ce pneu, **caractérisé en ce qu'**ils supportent en outre ledit pneu.

2. Ensemble de rouleaux selon la revendication 1, **caractérisé en ce que** deux ou plusieurs seconds rouleaux (10a, 10b, 30a, 30b) sont couplés en rotation aux premiers rouleaux.

3. Ensemble de rouleaux selon les revendications 1 à 2, **caractérisé en ce que** le support de chaque second rouleau (12a, 12b) est couplé avec un actionneur (16a, 16b) qui règle la position verticale de celui-ci.

4. Ensemble de rouleaux selon les revendications 1 à 3, **caractérisé en ce que** l'actionneur (16a, 16b) est un actionneur hydraulique.

5. Ensemble de rouleaux selon la revendication 4, **caractérisé en ce que** au moins un des actionneurs (16a, 16b) est raccordé à une source de milieu de pression hydraulique via une soupape commandée par pulsations (34a, 34b).

6. Ensemble de rouleaux selon les revendications 1 à 5, **caractérisé en ce que** le support des rouleaux respectifs est logé dans un cadre commun qui peut être entraîné en va-et-vient verticalement.

7. Ensemble de rouleaux selon la revendication 6, **caractérisé en ce que** le cadre peut être mis en rotation autour d'un axe vertical.

8. Banc d'essai à rouleaux comprenant au moins un ensemble de rouleaux selon l'une ou plusieurs des revendications précédentes.
